# EUROPEAN PATENT SPECIFICATION

(11) **EP 1 188 625 B1**
(45) Date of publication and mention of the grant of the patent: **01.03.2006**
(21) Application number: 01121012.7
(22) Date of filing: 31.08.2001
(51) Int. Cl.: B60R 25/00

(54) **Theft prevention device for vehicle**
Diebstahlschutzvorrichtung für Fahrzeuge
Dispositif de protection contre le vol pour véhicules

(30) Priority: 01.09.2000 JP 2000265283
(43) Date of publication of application: 20.03.2002
(73) Proprietor: YAMAHA HATSUDOKI KABUSHIKI KAISHA, Iwata-shi Shizuoka-ken (JP)
(72) Inventor: Hasegawa, Takahiko, Iwata-shi, Shizuoka-ken (JP)
(74) Representative: Grünecker, Kinkeldey, Stockmair & Schwanhäusser Anwaltssozietät

(56) References cited:
- EP-A- 1 170 181
- WO-A-01/28820
- DE-A- 3 103 354
- DE-C- 19 723 069
- US-A- 4 322 714
- US-A- 4 624 140

## Description

The present invention relates to a theft prevention device for a vehicle according to the preamble of the independent claim 1.

In motorcycles or the like for example, an ECU (electronic control unit) is provided for the control of EFI (electronic fuel injection) and ignition timing. The ECU controls to actuate injectors and ignition coils using data detected on engine revolution, throttle opening, and intake pipe vacuum according to predetermined maps and programs. Such an ECU is made by mounting on a printed circuit board semiconductor elements such as memory circuits in which maps and programs are stored and calculation circuits for processing data, and mounted as a single unit on the vehicle body.

Also is known a fall control device for controlling operation of motorcycles or the like when they fall. The fall control device is arranged with a bank sensor mounted on the vehicle body to control to stop fuel injection and ignition by means of the ECU when the bank sensor detects a fall of the vehicle body. The applicants of the present invention have made research and development of a fall control device using the semiconductor-based acceleration sensor. The acceleration sensor is made to form a capacitor between electrodes to detect the magnitude of acceleration as the capacitance changes according to acceleration. The acceleration sensor, in the form of a semiconductor element, has no large mechanical components except for the electrodes, and is capable of acquiring acceleration data with high accuracy.

To prevent the theft of such motorcycles, there is proposed a lock device to be attached to a wheel when the vehicle is parked or a theft prevention device to produce alarm sound when a bank sensor attached to part of the vehicle detects abnormal bank or vibration of the vehicle body. The theft prevention device is constituted with a bank sensor, a control circuit made up of a microcomputer, etc. for discriminating abnormal bank or vibration from signals detected with the bank sensor, an alarm device connected to the control circuit, and a power circuit for supplying power to the above components. The power circuit is connected to a vehide-mounted battery of 12 volts for example for stepping down the voltage to 5 volts for example being supplied to activate control circuits and sensors. Since such a theft prevention device must be effective even when the main switch or ignition unit is turned off, as when parked. Therefore, power must be constantly supplied even when the vehicle is parked.

However, in order to attach a conventional theft prevention device to a vehicle, a separate, dedicated bank sensor must be attached. This makes constitution complicated, restricts spaces for components, and increases costs.

Another problem is that, when it is intended to use the same printed circuit board for the ECU on vehicles with or without a theft prevention device to enhance the general purpose nature of the printed circuit board, since the battery power is constantly supplied to the theft prevention device, the power is supplied also to other parts than those necessary for the theft prevention device, namely to circuits in the ECU for actuating and controlling the engine. As a result, dark current increases and unnecessary power is wasted.

A theft prevention device as indicated above is known from US-A-4,624,140 relating particularly to a liquid medium capacity displacement sensor consisting of a brass tube housing mechanical and electronic portions of the sensor, and a conductive spherical vessel consisting of two hemispherical cavities and filled partly with a conductive liquid-like medium, wherein the two hemispherical cavities are separated from each other by an insulating washer and the inner surface of one or both of the two cavities have been coated with a dielectric layer. Due to the displacement of the contact between the conductive liquid-like medium and the inner surfaces of the cavities via movement of the sensors, a vibration or a sudden acceleration of the liquid medium capacity displacement sensor could be detected or measured in addition to an inclination thereof.

It is an objective of the present invention to improve a theft prevention device as indicated above so as to be capable of holding down power consumption.

This objective is solved according to the present invention by a theft prevention device with the features of the independent claim 1.

**Advantageously**, the acceleration sensor for detecting fall is used as the bank sensor which also detects vibration to prevent theft. As a result, the number of components is reduced, constitution is simplified, and cost is reduced.

According to a preferred embodiment, the vehicle is a motorcycle, an alarm device connected to said vibration determining means is provided for producing alarm sound, and a power source means is provided for the theft prevention device.

According to still a further preferred embodiment, said vibration determining means is a vibration determining circuit and said fall determining means is a fall determining circuit.

According to a preferred embodiment, an ECU is provided for controlling the operation of an engine, wherein the fall determining circuit is provided in the ECU 1 and is connected to the acceleration sensor and with an ECU-purpose power means connected to a vehicle-mounted battery. Here, an actuator is interposed between the acceleration sensor and the ECU-purpose power means so that current flows from the ECU-purpose power means toward the acceleration sensor.

With the above constitution, the theft prevention device is energized with the vehicle-mounted battery separately from the ECU, and the power circuit provided in the theft prevention device steps down the battery voltage and supplies it to the acceleration sensor. Therefore, even with the ECU being de-energized, the acceleration sensor remains energized and active. Since the current supplied to the acceleration sensor is prevented from flowing toward the ECU owing to the effect of the actuator, power consumption beyond necessary amount is saved.

According to another preferred embodiment, the ECU-purpose power means is an ECU-purpose power circuit, the theft prevention device-purpose power means is a theft prevention device-purpose power circuit, and the actuator is a diode.

According to still another preferred embodiment, the acceleration sensor is provided within the ECU and is formed from a semiconductor element.

With the above constitution, the constitution is made compact as the acceleration sensor is provided within the ECU.

According to another preferred embodiment, the acceleration sensor is connected through a filter means to the fall determining circuit and through a capacitor means to the vibration determining circuit.

According to another preferred embodiment, the filter means is a filter circuit and the capacitor means is a capacitor circuit.

According to another preferred embodiment, the fall determining circuit is provided for switching off the engine in accordance with a signal of the acceleration sensor.

According to another preferred embodiment, a drive means, in particular a drive circuit, connected with the fall determining circuit is provided for stopping energizing an ignition device, for shutting off fuel injection and for stopping driving a fuel pump in order to switch off the engine.

Other preferred embodiments of the present invention are laid down in further dependent claims.

In the following, the present invention is explained in greater detail with respect to several embodiments thereof in conjunction with the accompanying drawings, wherein:
- FIG. 1: shows a block structure of an embodiment of the invention; and
- FIG. 2: is an explanatory drawing of the constitution using a common ECU irrespective of the presence of the theft prevention device.

An embodiment of the invention will be hereinafter described in reference to the appended drawings, wherein only a preferred embodiment is described in which the acceleration sensor is used to detect the vibration and the bank angle of the vehicle body, and the embodiments are not mentioned in which the acceleration sensor is used to detect the vibration of the vehicle body or the bank angle of the vehicle body.

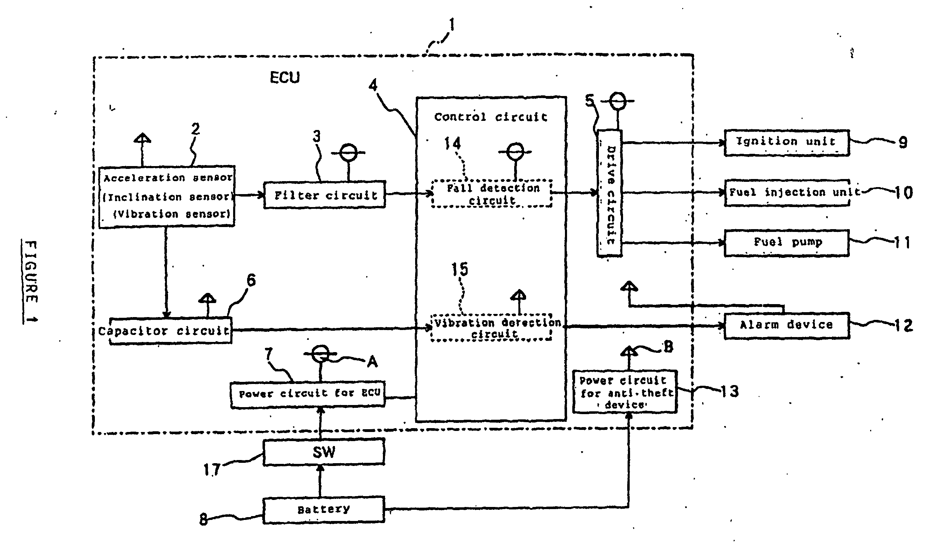

FIG. 1 shows the constitution of a theft prevention device for a motorcycle as an embodiment of the invention.

On a printed circuit board (not shown) for constituting an ECU 1 are mounted; an acceleration sensor 2, a filter circuit 3, a control circuit 4, a drive circuit 5, a capacitor circuit (capacitor coupling) 6, an ECU-purpose power circuit 7, and a theft prevention device-purpose power circuit 13. The circuits and sensors are interconnected through terminals (A) to ECU-purpose power lines, and through terminals (B) to theft prevention device-purpose power lines. The acceleration sensor 2, as will be described later, functions as a fall sensor by detecting bank angle of the vehicle and also as a theft prevention sensor by detecting vibration. Signals detected with the acceleration sensor 2 are inputted on one hand through the filter circuit 3 into a fall determining circuit 14 of a control circuit 4, and on the other hand through the capacitor circuit 6 into a vibration determining circuit 15 of the control circuit 4.

The filter circuit 3 is used to remove vibration component and noise component from the signals detected with the acceleration sensor 2 for detecting bank angle of the vehicle body. The fall control circuit 14 of the control circuit 4 comprises a microcomputer for discriminating a fall through calculation process of the detected signals coming through the filter circuit 3, and control programs and maps. The fall determining circuit 14 is connected through the drive circuit 5 to an ignition device 9, a fuel injection device (EFI) 10, and a fuel pump 11.

The fall determining circuit 14 determines a fall to have occurred when the bank angle of the vehicle body exceeds a specified value (for example 70°) to stop energizing the ignition device 9 and to shut off fuel injection by the fuel injection device solenoid, and further to stop driving the fuel pump 11 to prevent fuel from being spilled. Incidentally, the filter circuit 3 may be constituted as hardware with resistors and capacitors or as software by calculation-processing the detected signals, or combination of both. Fall control means is created in this way in the ECU using the acceleration sensor 2, the filter circuit 3, the fall determining circuit 14, and the drive circuit 5.

Signals detected with the acceleration sensor 2 are inputted through the capacitor circuit 6, separate from the fall control means, into the vibration detection circuit 15 located in the control circuit 4. The capacitor circuit 6 is to take out vibration components from the signals detected with the acceleration sensor 2. A primary filter for removing noise may be placed before the capacitor circuit 6. Or, the capacitor circuit 6 may be connected to the middle of the fall determination-purpose filter circuit 3 to remove error components and then to detect vibration components. The vibration determining circuit 15, when it detects vibration of a magnitude beyond a specified value from the vibration component signal, determines that a theft is attempted, and drives a drive circuit (not shown) located in an alarm device 12 to produce alarm sound. The vibration detection circuit 15 may be placed in the alarm device 12 rather than in the ECU 1.

On the vehicle is mounted a battery 8 of for example 12 volts. The battery 8 is connected to the power circuit 7 of the ECU 1 to energize the ECU 1 through a main (or ignition) switch 17. The ECU-purpose power circuit 7 steps down the battery voltage of 12 volts to for example 5 volts required for operating the control circuit 4, etc. in the ECU 1. The control-purpose voltage of 5 volts is supplied to the control circuit 4 and also through the control circuit 4 to the acceleration sensor 2 and the drive circuit 5.

The vehicle-mounted battery 8 is further connected to the alarm device-purpose power circuit 13 where the voltage is stepped down to a specified control driving voltage to energize and drive the alarm device 12.

Incidentally, a calculation process circuit for processing detected signals coming from the acceleration sensor 2 for taking out vibration components may be provided in place of or in addition to the capacitor circuit 6 in the vibration determining circuit 15.

In this way, a theft prevention device 18 is constituted with the acceleration sensor 2, the capacitor circuit 6, the vibration determining circuit 15, the alarm device 12, and the power circuit 13. Using the acceleration sensor 2 as both a fall sensor and a theft prevention-purpose sensor reduces the number of components and simplifies the constitution of the ECU 1. incidental, the acceleration sensor 2 may be mounted separately from the ECU 1 on the vehicle body. While the present embodiment is arranged that only the alarm device 12 constituting the theft prevention device is placed outside separately from the ECU 1 and other component circuits are placed within the ECU 1, in case the theft prevention device itself is made as a single unit as described later and attached as an option to the vehicle body, the power circuit 13 and the vibration determining circuit 15 as well as the alarm device 12 are placed outside the ECU 1.

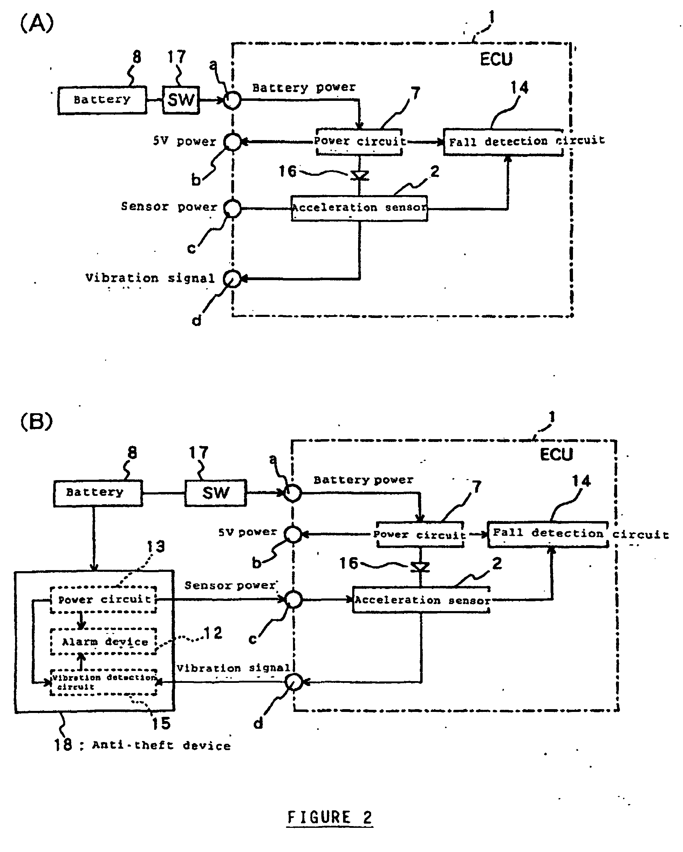

FIG. 2 shows example constitutions of the ECU 1 that can be attached as an option; FIG. 2 (A) shows the constitution of a vehicle without the theft prevention device and FIG. 2 (B) a vehicle with the theft prevention device. With the constitution shown in FIG. 1, the theft prevention device must be effective even when the main switch 17 is turned off, and so the acceleration sensor 2 and the control circuit 4 must be constantly energized, which requires a large dark current The present embodiment is to cope with such a situation.

As for the vehicle without the theft prevention device, as shown in FIG. 2 (A), the vehicle-mounted battery 8 is connected through the main (or ignition) switch 17 to the terminal (a) of the ECU 1. Battery power is supplied through the terminal (a) to the power circuit 7 in the ECU 1. The battery voltage stepped down with the power circuit 7 as described before is supplied to the acceleration sensor 2 and the fall determining circuit 14 consisting of microcomputer, etc. A diode 16 is interposed between the power circuit 7 and the acceleration sensor 2 to make current flow only in the direction from the power circuit 7 toward the acceleration sensor 2.

The ECU 1 further has a terminal (b) for drawing out 5 volt power supplied from the power circuit 7, a terminal (c) for supplying power from outside to the acceleration sensor 2, and a terminal (d) for taking out vibration signals coming from the acceleration sensor 2.

With the above constitution, when the main (orignition) switch 17 is turned on, control-purpose power is applied to the ECU 1. In that state, when the acceleration sensor 2 used as a bank sensor detects a signal, the detected signal is sent to the fall determining circuit 14 to discriminate the fallen state as described above.

As for the vehicle optionally provided with the theft prevention device, as shown in FIG. 2 (B), the theft prevention device 18 is provided with a vibration determining circuit 15 made up of the alarm device 12, the power circuit 13, a microcomputer, etc. The battery 8 is connected to the power circuit 13. The power circuit 13 steps down the voltage of 12 volts of the battery 8 to 5 volts for the sensor control power source. The sensor control power source of 5 volts energizes through the terminal (c) the acceleration sensor 2 in the ECU 1. Vibration signals detected with the acceleration sensor 2 are sent through the terminal (d) to the vibration determining circuit 15 made up of microcomputers, etc. in the theft prevention device 18. Unlike the constitution shown in FIG. 1, in this embodiment, the theft prevention device 18 itself is constituted as a component separate from the vehicle body. Therefore, the power circuit 13 for the theft prevention device is not mounted in the ECU 1 but installed as a unit in the theft prevention device 18, outside the ECU.

With the above constitution, the theft prevention device 18 is constantly energized with the battery 8, and the acceleration sensor 2 in the ECU 1 is energized with the control - purpose current through the terminal (c) even when the main switch 17 is turned off. Thus, the acceleration sensor 2 is constantly energized to serve as a vibration sensor. Here, owing to the function of the diode 16, the sensor-controlling current of 5 volts supplied to the acceleration sensor 2 does not flow toward the power circuit 7 in the ECU 1, namely the ECU 1 is not energized.

As described above, using the same constitution of ECU 1 commonly for vehicles with and without the theft prevention device as shown in FIGs. 2 (A) and 2 (B), general purpose nature of the ECU 1 is enhanced to simplify production lines. It is also possible to reduce dark current to reduce waste of power consumption. Placing the acceleration sensor 2 within the ECU 1 can provide a compact constitution.

According to the present invention as described above, since the single acceleration sensor is used both as the vibration detection sensor to constitute the theft prevention device and as the bank sensor for the fall detection, the number of components is reduced, constitution is simplified, and cost is reduced,

Thus the disadvantage as described above of the conventional theft prevention device for a vehicle is solved according to the present invention by a theft prevention device for a vehicle comprising a vibration sensor, a vibration determining circuit for receiving detected signals from the vibration sensor, an alarm device connected to the vibration determining circuit, a power source circuit for the theft prevention device, and a fall detection circuit for detecting the bank angle of the vehicle body by means of a bank sensor made of an acceleration sensor, wherein a common acceleration sensor constitutes the vibration sensor and the bank sensor.

## Claims

1. A theft prevention device (18) for a vehicle comprising a vibration determining means for detecting a vibration signal detected by a vibration sensor, a fall determining means for detecting a bank angle of a vehicle body detected by a bank sensor, wherein an acceleration sensor (2) is provided to constitute the vibration sensor and/or the bank sensor **characterized by** the theft prevention device comprising a purpose power means (13) adapted to connect a vehicle-mounted battery (8) to the theft prevention device (18) and to separately energize the acceleration sensor (2).

2. A theft prevention device according to claim 1, **characterized in that** the vehicle is a motorcycle, an alarm device (12) connected to said vibration determining means is provided for producing alarm sound.

3. A theft prevention device according to claim 1 or 2, **characterized in that** said vibration determining means is a vibration determining circuit (15) and said fall determining means is a fall determining circuit (14).

4. A theft prevention device according to at least one of the claims 1 to 3, **characterized in that** an ECU (1) is provided for controlling the operation of an engine, wherein the fall determining means (14) is provided in the ECU (1) and is connected to the acceleration sensor (2) and with an ECU-purpose power means connected to the vehicle-mounted battery (8), and an actuator is interposed between the acceleration sensor (2) and the ECU-purpose power means so that current flows only from the ECU-purpose power means toward the acceleration sensor (2).

5. A theft prevention device according to claim 4, **characterized in that** the ECU-purpose power means is an ECU-purpose power circuit (7), the theft prevention device-purpose power means is a theft prevention device-purpose power circuit (13), and the actuator is a diode (16).

6. A theft prevention device according to at least one of the claims 1 to 5, **characterized in that** the acceleration sensor (2) is provided within the ECU (1) and is formed from a semiconductor element.

7. A theft prevention device according to at least one of the preceding claims 1 to 6, **characterized in that** the acceleration sensor (2) is connected through a filter means to the fall determining circuit (14) and through a capacitor means to the vibration determining circuit (15).

8. A theft prevention device according to claim 7, **characterized in that** the filter means is a filter circuit (3) and the capacitor means is a capacitor circuit (6).

9. A theft prevention device according to at least one of the preceding claims 1 to 8, **characterized in that** the fall determining circuit (14) is provided for switching off an engine in accordance with a signal of the acceleration sensor (2).

10. A theft prevention device according to claim 9, **characterized in that** a drive means, in particular a drive circuit (5), connected with the fall determining circuit (14) is provided for stopping energizing an ignition device (9), for shutting off fuel injection and for stopping driving a fuel pump (11) in order to switch off the engine.

## Revendications

1. Dispositif de prévention contre le vol (18) pour un véhicule comprenant un moyen de détermination de vibration pour détecter un signal de vibration détecté par un capteur de vibration, un moyen de détermination de chute pour détecter un angle d'inclinaison latérale d'une carrosserie de véhicule détecté par un capteur d'inclinaison latérale, dans lequel un capteur d'accélération (2) est prévu pour constituer le capteur de vibration et/ou le capteur d'inclinaison latérale, **caractérisé par** le dispositif de prévention contre le vol comprend un moyen d'alimentation électrique (13) adapté pour relier une batterie montée sur le véhicule (8) au dispositif de prévention contre le vol (18) et pour alimenter séparément le capteur d'accélération (2).

2. Dispositif de prévention contre le vol selon la revendication 1, **caractérisé en ce que** le véhicule est une moto, un dispositif d'alarme (12) relié audit moyen de détermination de vibration est prévu pour produire une alarme sonore.

3. Dispositif de prévention contre le vol selon la revendication 1 ou 2, **caractérisé en ce que** ledit moyen de détermination de vibration est un circuit de détermination de vibration (15) et ledit moyen de détermination de chute est un circuit de détermination de chute (14).

4. Dispositif de prévention contre le vol selon au moins l'une des revendications 1 à 3, **caractérisé en ce qu'**un bloc de commande électronique (ECU) (1) est prévu pour commander le fonctionnement d'un moteur, dans lequel le moyen de détermination de chute (14) est prévu dans le bloc de commande électronique (1) et est relié au capteur d'accélération (2) ainsi qu'au moyen d'alimentation électrique du bloc de commande électronique relié à la batterie montée sur le véhicule (8), et un organe de commande est interposé entre le capteur d'accélération (2) et le moyen d'alimentation électrique du bloc de commande électronique de manière telle que le courant ne circule uniquement qu'à partir du moyen d'alimentation électrique du bloc de commande électronique vers le capteur d'accélération (2).

5. Dispositif de prévention contre le vol selon la revendication 4, **caractérisé en ce que** le moyen d'alimentation électrique du bloc de commande électronique est un circuit de puissance pour le bloc de commande électronique (7), le moyen d'alimentation électrique du dispositif de prévention contre le vol est un circuit de puissance (13) pour le dispositif de prévention contre le vol, et l'organe de commande est une diode (16).

6. Dispositif de prévention contre le vol selon au moins l'une des revendications 1 à 5, **caractérisé en ce que** le capteur d'accélération (2) est prévu à l'intérieur du bloc de commande électronique (1) et se compose d'un élément semi-conducteur.

7. Dispositif de prévention contre le vol selon au moins l'une des revendications précédentes 1 à 6, **caractérisé en ce que** le capteur d'accélération (2) est relié par un moyen de filtre au circuit de détermination de chute (14) et par un moyen de condensateur au circuit de détermination de vibration (15).

8. Dispositif de prévention contre le vol selon la revendication 7, **caractérisé en ce que** le moyen de filtre est un circuit de filtre (3) et le moyen de condensateur est un circuit de condensateur (6).

9. Dispositif de prévention contre le vol selon au moins l'une des revendications précédentes 1 à 8, **caractérisé en ce que** le circuit de détermination de chute (14) est prévu pour arrêter un moteur conformément à un signal du capteur d'accélération (2).

10. Dispositif de prévention contre le vol selon la revendication 9, **caractérisé en ce qu'**un moyen d'entraînement, en particulier un circuit d'entraînement (5), relié au circuit de détermination de chute (14) est prévu pour arrêter d'alimenter un dispositif d'allumage (9), pour couper l'injection de carburant et pour arrêter l'entraînement d'une pompe à carburant (11) afin d'arrêter le moteur.

## Patentansprüche

1. Diebstahlschutzvorrichtung (18) für ein Fahrzeug, die eine Schwingungs-Ermittlungseinrichtung, die ein Schwingungssignal erfasst, das durch einen Schwingungssensor erfasst wird, eine Fall-Ermittlungseinrichtung umfasst, die einen Querneigungswinkel eines Fahrzeugkörpers erfasst, der durch einen Querneigungssensor erfasst wird, wobei ein Beschleunigungssensor (2) vorhanden ist, um den Schwingungssensor und/oder den Querneigungssensor zu bilden, **dadurch gekennzeichnet, dass** die Diebstahlschutzvorrichtung eine Sonderstromversorgungseinrichtung (13) umfasst, die so eingerichtet ist, dass sie eine an dem Fahrzeug angebrachte Batterie (8) mit der Diebstahlschutzvorrichtung (18) verbindet und den Beschleunigungssensor (2) separat speist.

2. Diebstahlschutzvorrichtung nach Anspruch 1, **dadurch gekennzeichnet, dass** das Fahrzeug ein Motorrad ist und eine Alarmvorrichtung (12), die mit der Schwingungs-Ermittlungseinrichtung verbunden ist, vorhanden ist, um einen Alarmton zu erzeugen.

3. Diebstahlschutzvorrichtung nach Anspruch 1 oder 2, **dadurch gekennzeichnet, dass** die Schwingungs-Ermittlungseinrichtung eine Schwingungs-Ermittlungsschaltung (15) ist und die Fall-Ermittlungseinrichtung eine Fall-Ermittlungsschaltung (14) ist.

4. Diebstahlschutzvorrichtung nach wenigstens einem der Ansprüche 1 bis 3, **dadurch gekennzeichnet, dass** eine elektronische Steuereinheit (ECU) (1) vorhanden ist, die die Funktion eines Motors steuert, wobei die Fall-Ermittlungseinrichtung (14) in der ECU (1) vorhanden und mit dem Beschleunigungssensor (2) sowie mit einer ECU-Sonderstromversorgungseinrichtung verbunden ist, die mit der an dem Fahrzeug angebrachten Batterie (8) verbunden ist, und ein Stellglied zwischen den Beschleunigungssensor (2) und die Steuergerät-Sonderstromversorgungseinrichtung eingesetzt ist, so dass Strom nur von der FCU-Sonderstromversorgungseinrichtung in Richtung des Beschleunigungssensors (2) fließt.

5. Diebstahlschutzvorrichtung nach Anspruch 4, **dadurch gekennzeichnet, dass** die ECU-Sonderstromversorgungseinrichtung eine ECU-Sonderstromversorgungsschaltung (7) ist, die Diebstahischutzvorrichtungs-Sonderstromversorgungseinrichtung eine Diebstahlschutzvorrichtungs-Sonderstromversorgungsschaltung (13) ist und das Stellglied eine Diode (16) ist.

6. Diebstahlschutzvorrichtung nach wenigstens einem der Ansprüche 1 bis 5, **dadurch gekennzeichnet, dass** der Beschleunigungssensor (2) in der ECU (1) vorhanden ist und aus einem Halbleiterelement besteht.

7. Diebstahlschutzvorrichtung nach wenigstens einem der Ansprüche 1 bis 6, **dadurch gekennzeichnet, dass** der Beschleunigungssensor (2) über eine Filtereinrichtung mit der Fall-Ermittlungseinrichtung (14) und über eine Kondensatoreinrichtung mit der Schwingungs-Ermittlungsschaltung (15) verbunden ist.

8. Diebstahlschutzvorrichtung nach Anspruch 7, **dadurch gekennzeichnet, dass** die Filtereinrichtung eine Filterschaltung (3) ist und die Kondensatoreinrichtung eine Kondensatorschaltung (6) ist.

9. Diebstahlschutzvorrichtung nach wenigstens einem der vorangehenden Ansprüche 1 bis 8, **dadurch gekennzeichnet, dass** die Fall-Ermittlungsschaltung (14) vorhanden ist, um einen Motor entsprechend einem Signal des Beschleunigungssensors (2) abzuschalten.

10. Diebstahlschutzvorrichtung nach Anspruch 9, **dadurch gekennzeichnet, dass** eine Ansteuereinrichtung, insbesondere eine Ansteuerschaltung (5), die mit der Fall-Ermittlungsschaltung (14) verbunden ist, vorhanden ist, um Speisung einer Zündvorrichtung (9) zu unterbrechen, eine Kraftstoffeinspritzung zu sperren und Antrieb einer Kraftstoffpumpe (11) zu unterbrechen, um den Motor abzuschalten.
